# EUROPEAN PATENT SPECIFICATION

(11) **EP 1 515 921 B1**
(45) Date of publication and mention of the grant of the patent: **08.03.2006**
(21) Application number: 03740303.7
(22) Date of filing: 23.06.2003
(51) Int. Cl.: C03B 37/05, C03B 37/07

(54) **PROCESS AND APPARATUS FOR CONTROLLING MINERAL WOOL PRODUCTION USING A CASCADE ROTOR**
VERFAHREN UND VORRICHTUNG ZUM REGELN BEI DER HERSTELLUNG VON MINERALWOLLE MITTELS EINES KASKADENROTORS
PROCEDE ET APPAREIL DESTINES A FABRIQUER DE LA LAINE MINERALE

(30) Priority: 24.06.2002 EP 02254389
(43) Date of publication of application: 23.03.2005
(73) Proprietor: Rockwool International A/S, 2640 Hedehusene (DK)
(72) Inventor: GROVE-RASMUSSEN, Svend, DK-4000 Roskilde (DK)
(74) Representative: Lawrence, Peter Robin Broughton
(86) International application number: PCT/EP2003/006567
(87) International publication number: WO 2004/000742

(56) References cited:
- EP-A- 0 560 866
- EP-A- 0 567 486
- US-A- 4 315 720
- PATENT ABSTRACTS OF JAPAN vol. 016, no. 479 (C-0992), 6 October 1992 (1992-10-06) -& JP 04 175240 A (TANABE KAKOUKI KK), 23 June 1992 (1992-06-23)
- PATENT ABSTRACTS OF JAPAN vol. 018, no. 276 (C-1204), 26 May 1994 (1994-05-26) -& JP 06 048764 A (KAWASAKI STEEL CORP), 22 February 1994 (1994-02-22)

## Description

This invention relates to processes and apparatus for making mineral wool by centrifugal fiberisation of a mineral melt using a cascade spinner and collecting the fibres as wool.

As is conventional, the cascade spinner comprises a sequence of a top (or first) rotor and a subsequent (or second) rotor and optionally other subsequent rotors (such as third and fourth rotors). Each rotor rotates about a different substantially horizontal axis with a rotational direction opposite to the rotational direction of the or each adjacent rotor in the sequence. The different horizontal axes are arranged such that melt which is poured on to the top rotor is thrown in sequence on to the peripheral surface of the or each subsequent rotor, and fibres are thrown off the or each subsequent rotor, and optionally also off the top rotor.

The fibres are collected by entraining the fibres in an air stream which carries them from the spinner and deposits them as a web of wool on a porous conveyor through which the air stream is sucked. The wool may be unbonded tufts or, more usually, is a non-woven web containing binder and the web, often after cross lamination to form a batt, is then subjected to consolidation and curing in order to cure the binder and to form a bonded mineral wool product.

The fiberisation of the melt on the cascade spinner always produces three main classes of material, namely fibres, shot and waste. The fibres are the fibres having the properties desired for forming the mineral wool. The shot consists of very coarse elements which are entrained with the fibres and carried by the fibres into the wool. The shot tends to increase the mass of the wool (and utilise melt) without contributing significantly to the desired properties of the wool. The waste is fibrous or non-fibrous material which is not entrained in the air stream and, instead, falls downwardly from the spinner and is collected in a pit, from which it is taken and is recycled to the furnace for remelting. If there is inadequate entraining air, good quality wool may fall into the pit and become waste.

Factors which influence the product which is obtained in any particular process include the size of each rotor, the speed of each rotor (and thus the acceleration field on each rotor), the relative positions of the rotors, the impact position of the melt on the top rotor (including the total impact area and the peripheral and axial position of the area), the melt viscosity properties (for instance the viscosity of the melt when it strikes the top rotor and the change in viscosity of the melt as it travels through the process) and the melt rate (i.e., the volume of melt per unit time) poured on to the top rotor.

Accordingly, by selecting appropriate fiberising conditions from amongst these variables it is possible to influence the product of the process. Thus it is, for instance, well known that the fibre dimensions (including both the average and the spread of diameter and length) and the amount of shot are both influenced by appropriate selection of the positions, size and speed of each of the rotors, and by major changes in the melt viscosity properties, the melt rate and the impact position and the size of the impact area on the top rotor.

Minor changes in the position and/or size and/or shape of the impact area, and/or in the melt viscosity properties and/or in the melt rate may not cause significant changes in fibre dimensions but they do greatly influence the fiberising pattern, namely the relative proportions of fibres, shot and waste and the distribution of fibre production around the periphery of the cascade spinner.

Naturally it is desirable that the fiberising conditions should be selected to maximise fibres which are collected, to minimise shot, and to minimise waste. It is also desirable for the rate of fibre formation at each point around the cascade spinner to remain as constant as possible during a process run in order that the overall apparatus can be designed and conducted for optimum performance. For instance air is usually used to promote fiberisation as well as to entrain the fibres, and binder is usually applied. It is necessary to select in advance the amount of air supply and binder application at each position around the spinner and this selection has to be made on the basis of the amount of fibre formation which is expected at each position. There can be considerable inefficiency and/or inferior product quality if, for instance, fibre formation is occurring predominantly on one side of the apparatus when the air supply and the binder supply are both being provided on the expectation that there will be uniform fibre formation around the entire periphery of the cascade spinner.

It is therefore conventional practice, during start-up of a process, for the operator to select the major fiberising conditions (especially the size and speed of each of the rotors and the overall nature of the melt and its amount) and then to make minor variations in the major and minor conditions so as to obtain a selected (i.e., target) pattern of fiberisation without significant change in fibre dimensions. The minor conditions which have to be influenced to achieve the target pattern of fiberisation are predominantly the impact area and impact position, the melt viscosity properties and the melt rate.

Having achieved the target values for these, so as to obtain the target pattern of fiberisation, it might be thought that constant production would be achieved. Unfortunately constant production is not achieved because in practice there are spontaneous variations in conditions. Thus although the melt viscosity will remain substantially constant at the target value (unless there is some major deliberate change in the furnace supplying the melt) there will inevitably be spontaneous variations around the target melt viscosity. For instance in a typical process the melt temperature may vary by ±2.5% or ±1.5% and preferably by not more than ±0.7% (e.g., ±10°C around a target value of 1500°C), leading to a variation in melt viscosity of ±8% (e.g., ±0.8P around a target value of 9.6P) or sometimes more (e.g., ±10% or ±15%). Variations in raw materials may create additional deviation from the target value. Similarly, although the melt rate will remain substantially constant at the target melt rate, there will be spontaneous minor variations around the target melt rate. For instance the variation can be ±15%, or sometimes more (e.g., ±20% or ±25%). Because of these variations, and because of the risk of spontaneous clinker formation in the melt outlet (thereby distorting the flow pattern from the melt outlet) there are inevitable variations in the impact area and position on the top rotor.

Spontaneous changes are unavoidable due to these and other causes in conventional operation of a cascade spinner.

The effect of any particular variation of a fiberising condition on the fiberising process is very complex.

On each rotor of the cascade spinner, there is an equilibrium between melt which adheres to the rotor (and which usually adheres to solidified melt which in turn adheres to the rotor) and melt which is being thrown off the rotor as fibres or shot or waste. Accordingly, even if all the melt impacted on the top rotor at a single point at a constant rate and at a constant viscosity (all of which is impossible) there would still be some spread in melt flow from the first rotor to the second rotor. In practice, this pattern is made even more diffuse as a result of the inevitable spread in the impact position and area on the first rotor. The flow pattern from the top rotor to the second rotor leads inevitably to an even more diffuse flow pattern from the second rotor to the next rotor (if there is one), and so forth. Variations around the target melt rate and target melt viscosity properties cause still further difficulty in predicting the flow pattern.

It has been recognised for a very long time that the yield of wool which is collected per unit time is likely to vary, because of variations in the amount of melt fed on to the top rotor and the proportion which goes into the waste. The wool is collected on a travelling conveyor and so it follows that there will be variations in the weight per unit area of the collected wool if the conveyor on which the wool is collected travels at constant speed.

Accordingly it has been conventional for many years to regulate the speed of the collector in response to rate of production of wool. For instance it was proposed about forty years ago to regulate the speed of the conveyor and the rate of application of binder in response to variations in the total power consumption of the spinner, as described in US-A-2,888,060 and in Ingenioren, 15, August 1962, pages 449 to 453. When a single collector receives fibres from two or more spinners the speed of the single collector is controlled in response to the combined power consumption of the two or more spinners.

Normal practice is for variations in wool production to be compensated for in this manner and for the operator to watch the process manually and to rely on experience to adjust the fiberising conditions, such as the impact point, manually to try to hold the fibre yield and the fiberising pattern as constant as is reasonably possible. However this necessarily involves a significant time lag between the yield and/or pattern changing and remedial action being attempted.

It is described in JP-A-04175240 that the known systems for controlling the rate of feed of melt to the spinner are insufficiently accurate. In order to achieve greater control of the rate of feed of melt to the spinner, it is proposed to vary the rate of feed of melt in response to variations in the load on the electrical motor (i.e., the power consumption of the motor) which drives the second rotor (i.e., the first of the subsequent rotors), or variations in the average power consumption of all the motor.

There have been disclosures of other attempts at altering the quantitative properties (the weight of collected wool, including shot) and/or the qualitative properties (the fibre dimensions and/or the amount of shot) during operation of the spinning process.

For example, it is described in US 3,159,475 that different results can be achieved by altering the positions of rotors. This has the disadvantage of having to move the axial positions of the rotors during the process and is, in any event, not effective for reacting to spontaneous minor changes in the process.

In EP-B-560,866 and WO92/10436 it is proposed to move the top rotor relative to the melt stream and to move other rotors relative to each other, and it is also described that the rotation speed of the individual rotors may be adjusted. It seems to be considered that variations in the combination of the weight of melt on a rotor and the impact force of fresh melt going on to the rotor is an indication of process variability, and that the wheel positions may be changed to take account of the resultant variations in the linear radial load on the axle of a rotor.

This emphasis on variations in the linear radial load is indicated by the reliance in EP-A-560,866 on deviations in magnetic bearings of the rotors. These proposals would not be effective for reacting to spontaneous changes in the process and do, in any event, seem to be rather impracticable.

It is inconvenient to have to consider varying the speed of individual fiberising rotors and/or the relative positions of individual fiberising rotors during an actual fiberising process and it is inconvenient to have to rely on magnetic bearings in order to observe variations in the linear load on the axles of the rotors.

In EP-A-622,341 and WO99/42413, cameras are utilised to monitor the actual performance of the spinner from within the spinning chamber. Accordingly, these proposals are intended to react to spontaneous variations in the process.

In EP-A-622,341 the camera monitors the actual impact position and, when the camera observes that this deviates from a target impact position, the target position is restored by, for instance, moving the entire spinner.

In WO99/42413 the camera scans the upper part of the spinner only, and the resultant image is utilised to achieve automatic positioning of the impact area, by automatic movement of the melt outlet relative to the top rotor. It is noted in WO99/42413 that selecting the impact point to minimise the amount of shot has the effect of maximising the amount of waste, and vice versa, and so a compromise is desired.

These camera-operated processes suffer from the disadvantage that they require the provision of a camera in the hostile environment close to the spinner. They also suffer from the disadvantage that the camera concentrates on the visual environment close to the top spinner, and thus ignores what is actually happening elsewhere on the spinner. Another disadvantage is that they only provide a partial and visual observation of what has already happened, and thus do not provide the overall control accuracy which would be desirable.

In practice, even the best controlled cascade spinner processes of which we are aware still suffer from significant spontaneous variations in productivity and quality and we have realised that a significant part of these variations are due to variations in the fiberisation pattern around the rotors, and consequential variations in yield and quality.

For instance, when a process is initiated by a skilled operator in accordance with his best judgement, and when visual analysis indicates that the process is running smoothly, we have established by careful analysis that in fact there are likely to be variations over periods of, for instance, 15 or 30 minutes of as much as 10% or even 20% in the amount of power on the spinner utilised to produce a unit weight of wool. Accordingly, the power consumption for a day's run, to produce a unit weight of wool, can vary significantly.

Additionally, product quality will vary. For instance, there can be variations in the concentration of binder from point to point in the wool, due to the binder being applied constantly around the spinner even though there are spontaneous variations in the fiberising pattern. Similarly, there can be variability in fibre lay-down in the wool because the air flows by which the fibres are collected remain constant despite variations in the fiberising pattern. This can result in good quality wool falling into the waste pit, and therefore becoming waste which has to be recycled. It can also result in some wool following a non-ideal path through the collecting chamber with consequential risk of unwanted agglomeration and even curing within the chamber, again leading to a non-uniform final product. Also the amount of shot which goes into the pit is variable.

It would therefore be desirable to be able to control cascade spinner processes in an improved manner so as to improve both yield (preferably both power consumption per unit weight of wool and preferably also amount of melt per unit weight of wool) and wool quality (both as regards the nature and distribution of fibres and the distribution of binder).

In the invention, mineral wool is made by forming mineral fibres by centrifugal fiberisation of a mineral melt using a cascade spinner as described above, and collecting the fibres as wool. In this process, the or each subsequent rotor has a preselected size and rotates at a preselected speed. If there are two or more subsequent rotors the subsequent rotor adjacent to the top rotor (i.e., the second rotor) is in a preselected position with respect to each of the other subsequent rotors (e.g., the third and fourth rotors in the cascasde). The melt has substantially target melt viscosity properties and the melt is poured at a substantially target melt rate from the melt outlet over an impact area on the top rotor wherein the centre of the impact area makes an angle α with the horizontal of between 30 and 70°.

In the invention, the torque ratio is monitored wherein the torque ratio is the ratio of the torque on at least one rotor that is rotating at a preselected speed to the torque on at least one other rotor that is rotating at a preselected speed and any deviation of the monitored torque ratio from a target torque ratio is reduced or eliminated by altering the position of the impact area and/or the rotational speed of the top rotor and/or the position of the top rotor relative to the subsequent (second) rotor.

As explained in more detail below, monitoring the torque ratio necessitates monitoring torque values on one or more of the subsequent rotors and expressing the monitored torque values on subsequent rotors as a ratio, although another factor in the ratio may (as explained below) be the monitored torque on the first rotor in those systems where the first rotor also rotates a preselected speed.

The torque ratio which is being monitored can be considered to be a "process value", and the target value can be considered to be a "set point", when using the conventional terminology of control systems.

Monitoring the total torque for the entire spinner or the torque for one rotor only, as in the prior art, can give control of yield despite gross variations in the amount of melt. However it does not allow for the improved control of yield and quality obtainable in the invention by monitoring the torque ratio and then using this to adjust the defined conditions on the top rotor (and especially the position of the impact area). The invention allows for control to compensate for what may appear to be minor variations in the process but which we now realise can have significant impact on efficiency and quality.

The invention allows for much faster reaction to deviation from target conditions and, in particular, can allow for automated, substantially instantaneous, reaction to deviation from target conditions. It allows for reaction to deviations from the total target conditions which influence the overall result of the process, instead of reacting to deviation in only one of the conditions (namely maintenance of the impact area at a preselected position).

It can also be used for initial start-up of the process (on the basis of target values known from prior work) but it is particularly desirable for the control to allow for substantially immediate, automated, restoration of a target fiberising pattern once that pattern had been established manually (somewhat similar to a "cruise control" when driving an automobile).

The control which is possible as a result of the invention allows for control of the fiberisation pattern for instance the rate and position of fibre formation off each rotor, including also consideration of fibre length and diameter. It also controls yield and so allows for more cost-effective production of the collected wool. In particular, without the control of the invention the total power (i.e., the sum of the power of all the motors) required per unit mass of collected wool inevitably varies during a process, and it is, naturally, desirable to reduce the standard deviation to the lowest possible value. Reductions in waste and shot are also obtainable. The invention allows a significant reduction in power consumption and melt beyond what is achievable by normal control procedures.

Another advantage of the invention arises when two (or more) spinners are being used in side-by-side relationship to supply fibre on to a single collector. It is desirable that the resultant web should be as uniform as possible across the width but variations in the fiberisation pattern and the productivity of each spinner mean that there are liable to be variations across the width. The improved control achievable by the invention allows minimisation of these variations.

The invention is based in part on the realisation that three separate effects can be combined to achieve the desirable result of controlling the process.

One effect is that the torque ratio (either on one or more of the subsequent rotors alone, or optionally with the top rotor if that is running at a preselected speed and size) can be indicative of several important effects. One is fiberisation, including the overall fiberisation pattern, which is actually obtained when there are minor changes in melt viscosity and/or melt rate around a predetermined target value which is intended to be constant, and/or when there are changes in the impact area and/or position. As a result, restoring the actual (or monitored) torque ratio in a particular process to a target torque ratio which is known from prior experience of that process to be indicative of a chosen result, for instance a selected fiberisation pattern, will substantially restore the chosen result.

A second effect is that, even though changes in fiberisation may occur even though the impact position and area remains unchanged, the torque ratio can be controlled merely by changing the impact position, and/or by changing the rotational speed of the top rotor, and/or its position relative to the first subsequent rotor. Preferably the ratio is changed solely by changing the impact position.

A third effect is that these changes (and in particular the preferred change in the size and/or position of the impact area) can not only be used to react to spontaneous and unwanted changes in the size and/or position of the impact area (for instance due to clinker in the melt outlet) but are also effective to react to spontaneous deviations in the melt viscosity properties and/or the melt rate around the substantially constant target values which were intended for these.

The invention is concerned predominantly with the control of a process where the major fiberising conditions are preset by the preselection of the speed and size of each of the subsequent rotors and the relative positions of the subsequent rotors, when there is more than one, and by the choice of the type of melt. In practice, it is highly preferred that all the rotors, including the top rotor, should be of preselected speed and size and in preselected positions with respect to one another. The fibre properties (such as diameter and length) obtained in the invention are therefore usually controlled predominantly by the preselection of the rotor sizes and rotor speeds and rotor positions (and the choice of type of melt and its melt rate), and the invention is then used to allow optimum control of the attainment of fibres having these properties.

Accordingly the invention is preferably applied to the very important control that is required to react to the spontaneous deviations from target melt viscosity properties and/or target melt rate and/or in the impact area or position and which occur spontaneously during a process run.

If there is a gross change in one or more of the variables, the control provided by the invention may prove inadequate, whereupon the operator (or some other automation system) may be required to reset the fiberising conditions to some new target values whereupon the invention can then be used to resume control of the process.

Accordingly, the invention includes within its scope any process where the defined control with respect to a target value is utilised for a useful period even if, at some stage during a process running several hours, it may be necessary to reset the target values or to control the process in some other way.

For instance, a process may be running satisfactorily with a preselected set of rotor speeds and or a preselected type or rate of melt and it may be desired to convert, without stopping the process, to different rotor speeds or to a melt or melt rate which differs from the initial melt or melt rate by more than can be compensated for by the invention. When this happens, the transfer to control of the new process can be achieved merely by transferring from an algorithm suitable for the old process (e.g, at one set of rotor speeds) to an algorithm suitable for the new process (i.e., at the new set of rotor speeds).

The invention can also be used for start-up of a process where the target values are known from an algorithm based on prior experience or knowledge of operation of the same or similar apparatus. In such a process, the algorithm may be such that it reacts to data on, for instance, the effect of varying the melt rate and/or melt viscosity so as to allow selection of suitable target values for these. Preferably however the melt rate and melt viscosity are preselected at target values which are substantially constant in that actual deviations in these are sufficiently small that the process can be controlled adequately (in response to changes in the torque ratio) merely by changing the position of the impact area, and/or the position or speed of the top rotor.

The invention is of particular value when the target values are derived by the initial step of establishing a desired fiberisation pattern with a melt which is intended to have substantially constant melt rate and viscosity, and then utilising the invention to promote maintenance of that pattern despite some variations in the melt rate or viscosity or the impact area or position.

Thus a preferred process of the invention is one in which mineral wool is made by forming mineral fibres by centrifugal fiberisation of a mineral melt using a cascade spinner as described above and collecting the fibres as wool, and the process comprises the initial step of obtaining a target pattern of fiberisation off the centrifugal spinner by selection of one or more of a fixed speed and size for the or each subsequent rotor, a fixed positioning of the subsequent (second) rotor with respect to any other subsequent rotor, the position of the top rotor relative to the subsequent (second) rotor, the rotational speed of the top rotor, a target melt rate, target melt viscosity properties, and the size and/or shape and/or position of the impact area. Having achieved a target pattern of fiberisation, a target torque ratio on one or more of the subsequent rotors (and optionally on the top rotor if that is running at a preselected speed) is determined when this target pattern of fiberisation is achieved, and the torque ratio on one or more of the subsequent rotors is monitored. During subsequent running of the process for, e.g., ½ hour or 1 hour to 4 or 8 hours or longer, any deviation of the monitored torque ratio from the target torque ratio is reduced or eliminated by altering the size of the impact area and/or the rotational speed of the top rotor and/or the position of the top rotor relative to the second rotor, whereby the reduction or elimination of any deviation in the monitored torque ratio from the target torque ratio results in reduction or elimination of any deviation of the fiberising pattern from the target fiberising pattern.

Accordingly, in this aspect of the invention, a selected pattern of fiberisation is established (either automatically or manually) and unavoidable changes in that pattern due to subsequent minor variations in the melt rate, melt viscosity properties and/or impact area position are compensated for by monitoring, and compensating for, deviations in the torque ratio.

The difference between the monitored and target torque ratios can be utilised, in whole or part, to allow for manual control of the process. Preferably, however, the difference between the monitored and target torque ratios is utilised automatically to provide automatic control of the process. Accordingly, in the preferred processes of the invention, the target fiberisation pattern is established as a preliminary stage and the "cruise control" of the invention is then allowed to run the process automatically either until the end of the process (e.g., 1 to 8 hours or longer) or until one of the process conditions deviates unacceptably such that the invention is not or may not be capable of restoring the desired fiberisation. For instance there is preferably an automated or manual override or an alarm to indicate if, for instance, actual value of the melt rate and/or the melt viscosity and/or the impact point or area are deviating too far from preselected target values or are deviations beyond a preselected range.

The invention not only has the advantage of maintaining production at or closer to the selected fiberisation process than would otherwise be possible either manually or automatically, but it also allows for the overall energy efficiency of the process (per unit mass of wool) to be improved beyond what is obtainable by maintaining the simple relationship between total torque and conveyor speed, for instance as in US-A-2,888,060.

The torque ratio which is selected and thereafter monitored must be a torque ratio which indicates relative fibre distribution around the periphery of the cascade spinner, and not merely the total mass of fibre which is produced. The ratio may be of the torque on different subsequent rotors if there are at least two) or, if the top rotor has a preselected size and speed, the ratio may be of the torque on the top rotor and on a subsequent rotor. The torque ratio may include, as a component, the summation of torque on at least two rotors, which are each running at a preselected speed.

When the amount of melt going on to a rotor is constant the torque is influenced predominantly by the amount of melt which is centrifugally accelerated off the surface and by the nature of this acceleration, for instance as fine fibres or shot. In practice, however, there are spontaneous variations in the melt rate on to the top rotor and merely summing the torque of all the rotors gives no indication about the relative distribution of melt, and fiberisation, on individual rotors. Instead, this information is derivable from knowledge of the relative torques on different rotors and, in particular, on ratios of torques. Thus by monitoring the ratio of torque on two (or more) rotors it is therefore possible to monitor the extent and type of centrifugal acceleration of melt off one or more rotors relative to one or more other rotors.

In practice it is usually not essential to hold the torque ratio exactly at the target torque value. It is instead usually adequate to control the process in such a way as merely to reduce significantly the standard deviation from a mean (i.e., the target value). For instance during a normal process the standard deviation may be 10%, 15% or more and the invention is therefore valuable if it reduces the standard deviation to lower values, for instance to below 10% and preferably below 7%, 5% or less.

The target and monitored torque ratios may have a single component (e.g., a single ratio) or several different and independent components such that each of the components in the monitored value has to be controlled against each of the corresponding components in the target value. The torque ratio is usually calculated, at least in part, from the subsequent rotors (so as to give an indication of the relative performance on the predominant fiberising rotors). However the top rotor usually also has a fixed size and rotational speed in which event the torque ratio can also include, as one component, the torque on the top rotor.

The torque on the top rotor may need to be controlled within a defined upper limit (generally indicating a large angle α) and defined lower limit (generally indicating a small angle α) so as to exclude the possibility of setting α at an impracticable value. An alarm may occur if the torque value on the top rotor goes outside this range.

The cascade spinner can consist solely of the top rotor and a single subsequent rotor (i.e., the second rotor) but usually there are at least two, and most usually three, subsequent rotors. Accordingly a preferred spinner has a top (first) rotor and a subsequent second, third and fourth rotors. The torque ratio may comprise the ratio of torque on the third and fourth rotors. Instead of or in addition to this the torque ratio may comprise the ratio of torque on the second and fourth rotors. Instead of or in addition to this the torque ratio may comprise the ratio of torque on the second and third rotors. The ratio of torque on the second and fourth rotors is generally found to be of particular value. When there are only 3 rotors, the ratio preferably includes the torque of the last rotor (the third) as one of its components.

In some instances summation of torque on some, but usually not all, of the subsequent rotors is useful, especially when the summation is then utilised to calculate a ratio relative to one or more of the subsequent rotors. For instance summation of the torque values on the second and fourth rotors will give an indication of total fiberisation on one side of a 4-rotor cascade spinner and the torque value on the third rotor, or the summation of the torque values on the first and third rotors, gives an indication of the fiberisation of the other side of the cascade spinner. The ratio of the summation of the second and fourth to the summation of the first and third (or sometimes to the third alone) therefore gives an indication of the fiberisation pattern on each side of the spinner.

Similarly, summation of the torque on the third and fourth rotors gives an indication of the fiberisation off those and the ratio of this summation to the torque on the second rotor or to the summation of the torque on the first and second rotors is another useful torque ratio.

The preferred ratios are of the fourth rotor with the second, or with the third, or with the sum of the first and second.

It will be seen that an algorithm can be designed according to the desired accuracy and complexity of the control process. In its simplest form the algorithm will, for instance, merely control the process within upper and lower torques on the top rotor and within a narrow range for the ratio of torques on two of the subsequent rotors but increasing accuracy can be imparted by increasing the number of variables in the algorithm.

The fiberisation pattern will usually be preselected to yield the highest amount of fibre off the last rotor (or the last two rotors) that can conveniently be conveyed away by air and sprayed uniformly with binder. By monitoring the ratio of the torque on the last rotor to the torque on a preceding rotor (especially the second rotor when there are four rotors in the cascade) it is therefore possible to hold the amount of fibre formed off the last rotor or rotors at or near this optimum without incurring the risk that the amount of fibre will exceed this to such an extent that there is insufficient carrier air to carry the fibres forward to the collector and/or there is insufficient binder to provide uniform distribution of binder through the web.

Known procedures for controlling the operation of cascade spinners, such as those discussed above, usually involve the addition of additional monitoring apparatus, such as by visual monitoring, and an advantage of the invention is that the monitoring can be conducted solely on the basis of information which is conventionally generated anyway. In particular, it is now conventional for each rotor to be driven, during any particular process, at a fixed speed by a motor dedicated to that rotor. The power consumption of each motor (in kw) is proportional to the torque on that rotor and the angular velocity of that rotor, but the angular velocity is preselected so as to be constant, and so the power consumption is proportional to torque. Accordingly, the process can be performed either by monitoring changes in the power consumption (in kw) for each motor or by observing the changes in torque. If two rotors are driven by a single motor, then the power consumption of that single motor is proportional to the sum of the torques on the two rotors.

Alternatively, the torque on a rotor can be determined by some additional device. This is usually unnecessary when, as is preferred, each rotor is driven by a dedicated motor. However some cascade spinners have more than one rotor driven by a single motor. If the spinner has, for instance, one motor driving rotors 2 and 4 and another motor driving rotors 1 and 3 and if the torque ratio is merely a ratio of the torque on rotors 2 and 4 to the torque on rotors 1 and 3, then again it is adequate to rely on the torque on each motor. Usually, however, it is necessary to determine the torque on each individual rotor, and this can be determined by, for instance, the provision of an appropriate torque strain gauge on each rotor.

When, as is preferred, each rotor is driven by a dedicated motor, the variation in power consumption for each motor is conventionally observed substantially instantaneously as part of the normal supervision of the conventional process. Accordingly this allows for instantaneous information about changes in the torque value without adding extra hardware. This also allows for substantially instantaneous corrections to be made automatically. This is a huge improvement on existing processes where corrections can usually only be made after it is observed manually or automatically that a change in fiberisation pattern has occurred.

In practice it is, however, often unnecessary or even inappropriate to control the process instantaneously (e.g., within a second of a deviation in torque being observed. Instead, it is preferred to control the process on the basis of a statistically significant power consumption values (or torque) calculated automatically on the basis of a plurality of sequential, substantially instantaneous, observations of the power consumption (or torque) of the or each relevant motor. For instance a statistically significant value may be calculated automatically for each predetermined period of, for instance, a few seconds, a minute or a few minutes and the correction made automatically at the chosen intervals.

Accordingly it is possible to preselect the frequency with which the torque ratio is monitored and utilised to correct any deviation from the preselected value. Thus the invention allows either instantaneous automatic correction or frequent correction at whatever intervals are appropriate, but these intervals will in practice always be much shorter than the intervals that would have been involved in any prior, manual, correction processes for cascade spinners.

Even if correction is applied only at preselected intervals, it may be desirable to monitor the torque ratio instantaneously during the time a correction of the torque ratio is being made, so as to facilitate fast attainment of the required correction.

The automatic utilisation of the deviation in torque ratio is utilised to alter the conditions on the top rotor and thereby to reduce or eliminate the deviation and thus tend to restore the selected pattern of fiberisation. Preferably the process does result in both the torque ratio and the pattern of fiberisation being restored substantially to the target torque ratio and the target pattern of fiberisation which had been selected initially. However, even if substantially complete restoration of the fiberisation pattern is not possible (for instance because of changes in the melt viscosity or rate greater than can be compensated for by the invention) the invention is still valuable because it does usually allow for an improvement in the fiberisation pattern towards the initial target pattern, even when there are changes in the melt which are greater than can be compensated for by the invention.

There are various ways in which the conditions on the top rotor can be varied in response to the deviation in the torque ratio so as to restore the target torque ratio and, therefore, the target pattern of fiberisation.

One way involves moving the axis of the top rotor relative to the subsequent second rotor. However this necessitates that the top rotor must be movable with respect to the others, and it is usually more convenient for all the rotors of the cascade spinner to be in fixed positions relative to one another.

Another way is to alter the rotational speed of the top rotor. However it is generally preferred that the total power consumption or torque of the cascade spinner should be kept as close to constant as is reasonably possible, and so deliberate variation in the rotational speed of the top rotor contradicts this. Accordingly it is preferred for the top rotor to have a fixed rotational speed.

The preferred way of responding to deviation in torque ratio is therefore by automatic adjustment of the position of the impact area on the top rotor.

The most important adjustment that can be achieved with respect to the impact area is adjustment of the angle α between the centre of the impact area and the horizontal. This can be done by moving the entire cascade spinner relative to the melt outlet, but preferably the cascade spinner is in a fixed position and the angle α is altered by moving the melt outlet transversely to the axle of the top rotor. The axial position may also have an effect, and this can be altered by moving the melt outlet parallel to the axle of the top rotor.

The size and shape of the impact area may also have some influence on performance. The size will, of course, increase as α decreases but, additional to this, the shape of the melt stream (as indicated by its horizontal cross section) may influence the area of melt on the top rotor. For instance under ideal conditions the area is controlled by the angle α and the vertical fall of the melt, since the melt will ideally adopt a cylindrical configuration during falling and the radius of the cylinder will decrease as the depth of fall increases. However if the melt outlet is accidentally blocked by clinker or deliberately reshaped to generate a stream having a ribbon configuration parallel to the axis of the top rotor, the resultant stream may be spread over a wider axial band on the top rotor. As a result the axial length of the band of melt (and therefore the impact area on the top rotor) increases with the result that the depth of the layer of melt on the top rotor will decrease, and this reduced thickness in the layer of melt will influence subsequent fiberising conditions.

The most significant effect is usually achieved as a result of altering the peripheral position of the centre of the impact area (the centre being selected by a visual estimate of the centre of the stream immediately before any part of the stream strikes the top rotor). Clinker accumulating in the melt outlet can cause spontaneous variations in the impact point, and thus the angle α, and deliberately moving melt the outlet transversely relative to the axis of the top rotor so as to restore α to the intended value will eliminate this deviation.

This is consistent with prior control systems which are aimed predominantly at ensuring that the impact point remains at its preselected optimum position despite any spontaneous deviation of the flow of melt from the melt outlet due to clinker in the melt outlet. However an important feature of the invention is that the impact point, and in particular the angle α, may be deliberately changed away from the initial value of α to a different value of α to compensate for changes in the melt viscosity properties and/or the melt rate. For instance these may deviate around the target value sufficient to influence the fiberisation pattern significantly even though they may still be considered to be substantially constant.

Thus in the invention we may deliberately change α away from the initial selected value of α so as to tend to restore, or completely restore, the selected torque ratio or fiberisation pattern despite spontaneous changes in the melt viscosity properties and/or melt rate even though the impact area or position may have remained unchanged (or may also have changed).

The extent by which α may be varied from the initial target value of α is usually not more than about 20° and usually not more than about 15° or 10° or, preferably, not more than 5°. Usually the process is conducted so that α is varied during the process through a range of not more than about ±10° and usually not more than about ±5° or preferably not more than ±3°, from the initial target value of α.

The entire melt viscosity profile is significant in that the viscosity is likely to increase from one rotor to the next and the performance on each rotor is influenced by the viscosity on that rotor. However, for convenience, it is usually sufficient to consider merely the melt viscosity at the time of impact on the top rotor. In general, we find that if the melt viscosity increases spontaneously, the automatic compensation will involve moving the melt outlet so as to reduce α and, conversely, if the viscosity decreases then the automatic compensation will involve moving the melt outlet to increase α.

If the melt rate increases then the automatic compensation will involve moving the melt outlet so as to increase α. Conversely, if the melt rate decreases the automatic compensation will involve moving the melt outlet so as to decrease α.

Part of the success of the invention depends on the fact that a single adjustment (generally of α) will simultaneously compensate for deviations from the target melt viscosity properties, the target melt rate properties, and the initially intended value of α. Indeed, an advantage of the invention over the prior art is that it may deliberately result in α being changed from an initial target value of α so as to compensate for a change in the melt viscosity properties and/or the melt rate.

The benefits of the invention are particularly significant on cascade spinners having four rotors although the spinner can have, for instance, two, three or five rotors. The benefits are also greatest when the spinner is operating at reasonably high acceleration fields, for instance with the top rotor having an acceleration field of above 10km/s² and preferably 30 to 60km/s², although values of up to, for instance, 100km/s² can be useful.

The preferred spinners are those which operate with such an acceleration field on the top rotor and wherein each subsequent rotor has an acceleration field at least as great as the acceleration field in the preceding rotor. Preferably the second, third and (if present) fourth rotors all have an acceleration field at least 1.2 times the acceleration field of the top rotor and usually the acceleration field on the last rotor is at least twice the field on the first. Some such arrangements are described in, for instance, EP-A-567,486.

Best results are achieved when the angle α is, throughout the process, always between 40 and 65°, preferably between 45 and 60°.

The invention includes not only the described processes but also apparatus for performing the processes. In particular, it includes apparatus including means for monitoring the torque ratio (which means may merely be means for monitoring the power consumption value on one or more rotors) and means for changing the size and/or position of the impact area and/or the rotational speed of the top rotor and/or the position of the top rotor relative to the subsequent second rotor in order to make any appropriate change in the torque ratio. In particular, the apparatus preferably comprises means for altering α, and in particular, for moving the melt outlet transversely relative to the axle of the top rotor.

The invention is illustrated in the accompanying drawings in which
Figure 1 is a lengthwise cross section through a conventional spinning chamber containing a cascade spinner, the cross section being taken close to the front of the cascade spinner and looking towards it,
Figure 2 is a cross section on the line 2-2 through the apparatus shown in Figure 1, and
Figure 3 is a plot of the variations in power consumption during a 24 hour process run with and without control of the torque ratio in accordance with the invention.

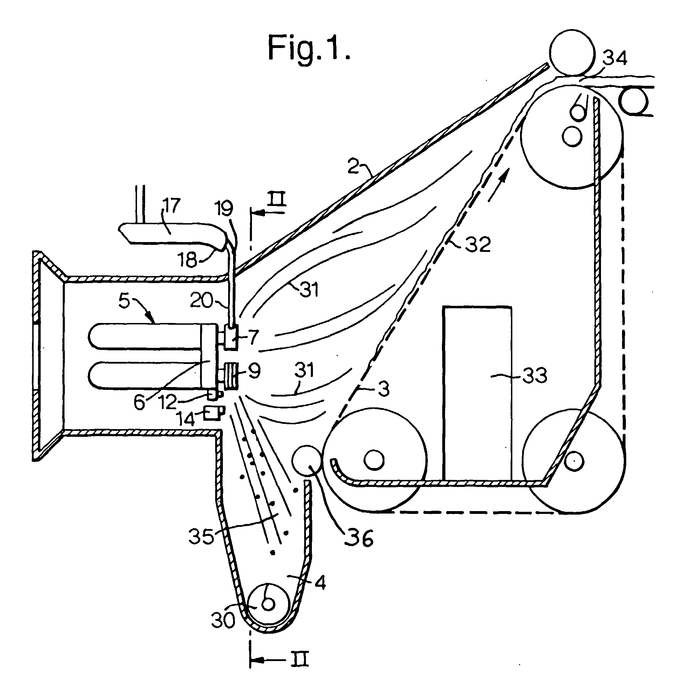

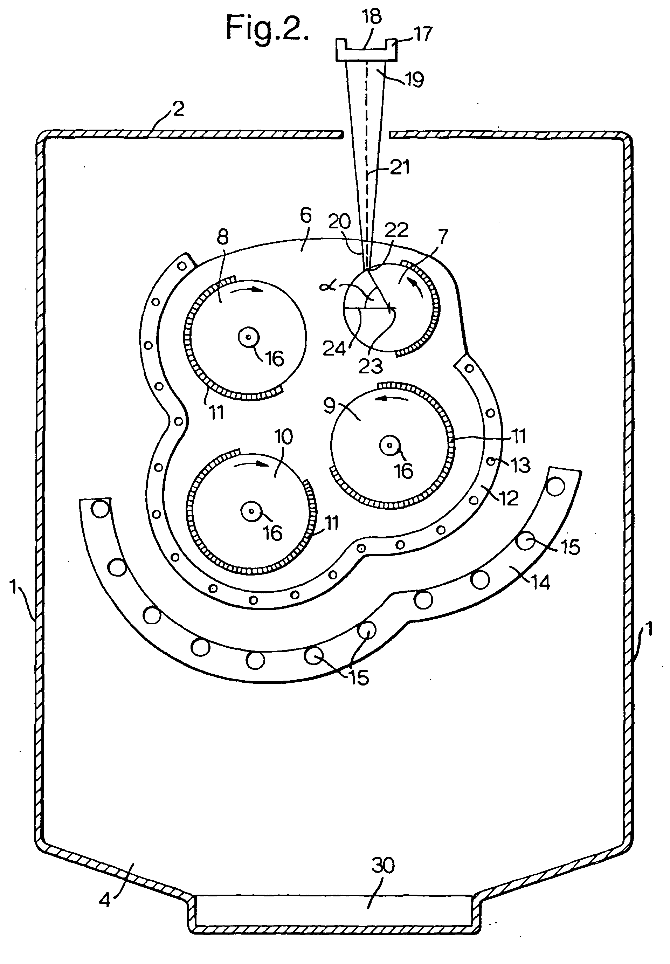

The spinning chamber in Figures 1 and 2 has side walls 1, a roof 2 and a base 3 extending down into a pit 4 in which waste material is collected and from which it is removed by a screw conveyor 30 or other suitable means. The top of the pit is defined by a roller 36.

A cascade spinner 5 is mounted in the chamber and comprises a housing 6 carrying the rotors and the motors for driving them.

The rotors are mounted on the chamber side of the front of the housing 6 and consist of a top (first) rotor 7, a subsequent (second) rotor 8, a subsequent (third) rotor 9 and a subsequent (fourth) rotor 10, the rotors counter-rotating to each adjacent rotor in the sequence, as shown by the arrows. Each of the rotors is mounted on a substantially horizontal axle which extends rearwardly into the housing 6 and preferably leads to a dedicated motor for rotating that rotor at a controllable speed.

An air slot 11 is positioned around part of each of the subsequent rotors, and in the drawing also around part of the top rotor 7, for blasting air forwardly over the periphery of the rotors, so as to promote fiberisation in known manner. There can be blades in the air slots in order to impart a tangential component to the air blasts. The inner diameter of each air slot is substantially the same as the outer diameter of the periphery of the associated rotor, so that the air blast creates a wall jet over that part of the periphery, in known manner.

There is a binder ring 12 containing binder spray orifices 13 positioned around and beneath the cascade spinner and there is a secondary air ring 14 containing orifices 15 positioned beneath the cascade spinner. Secondary air for transporting the fibres away from the rotors is blown forwardly through the orifices 15. Binder is sprayed through the orifices 13 so as to be applied into the cloud of fibres which is carried forward from the rotors by the air streams from the orifices 15 and from the ducts 11. Binder may also be sprayed into the cloud of fibres from binder spraying devices 16 coaxial with and mounted on the front of, some or all of subsequent rotors 8, 9 and 10.

A melt gutter, shown diagrammatically at 17, receives melt from a furnace (not shown) and the melt flows out of the gutter at the melt outlet 18. Initially the melt has the configuration of a wide ribbon 19 but, as it falls down through the roof 2 of the chamber and towards the top rotor 7 it adopts a narrower, cylindrical configuration 20. This cylindrical melt stream impacts on to the top rotor 7 over an impact area 22, the centre of which is visually estimated on the basis of the visual estimate of the centre line 21, and this is the impact point. It makes an angle α between the axis 23 of the top rotor 7 and the horizontal line 24.

Fibres thrown off the rotors are carried by the air streams, as shown diagrammatically by the lines 31, towards a continuously moving conveyor 32 which defines the base 3 of the chamber close to the spinner. Suction is applied through the conveyor 32 by suction box 33 and so fibres are collected on the conveyor as it travels upwardly, and accumulate on the conveyor as a web of mineral wool 34 which is carried on the conveyor out of the top of the collecting chamber. The mineral wool includes a substantially uniform distribution of uncured binder applied from, for instance, the orifices in the binder ring 12. The mineral wool also includes shot entrained in the fibres and carried on to the collector 32. Other shot and waste material falls into the pit 4, as shown by lines 35.

At the start of a process, the operator usually has each of rotors 7, 8, 9 and 10 each running at a preselected rate of rotation, and thus with a preselected, acceleration field. Likewise, the rotors are usually in preselected positions relative to each other and to the spinning chamber. Melt flows along the gutter 17 and down on to the impact point while air is blasted through the air ducts 11 secondary air is forced through the orifices 15, and binder is sprayed through orifices 13 (and 16). The operator adjusts the rate of flow of the melt and the lateral position of the melt outlet relative to the axis 23 so as to select the position α which, under this set of conditions, gives the optimum fiberisation pattern. In particular, the operator will be seeking a minimum amount of waste, a minimum amount of shot entrained with the fibres, and a reasonably uniform distribution of fibre formation around the sides and the base of the cascade spinner, often with a maximum around the lower part of the cascade spinner.

In addition to wanting to minimise the amount of waste and shot, the operator will also want to minimise the amount of fibres which fall sufficiently low, for instance close to the roller 36, that instead of falling into the pit as waste they remain in the collecting chamber for an undesirably extended period, before they are carried out of the chamber on the conveyor 32. The fibres that collect close to the roller 36 are liable to form into dense tufts, which may even undergo partial curing in the collecting chamber, and as a result this leads to a less homogeneous product after the final curing operation.

In the process of choosing the target fiberising conditions which give the selected fibre distribution, the operator may have encountered fibre distributions where, for instance, too much fibre is generated on the left-hand side of the spinner or too much fibre is generated on the right-hand side of the spinner. These are both undesirable as they may result in those fibres receiving an inadequate amount of binder and/or they may result in undesirable build up of fibre on the adjacent wall of the chamber. Similarly, the operator may have encountered conditions where there is too much fibre made at the lower part of the spinner. This may have the disadvantage of causing the fibre in that part of the chamber to carry inadequate binder and/or it may result in the air from the orifices 15 beneath the spinner being inadequate to carry the fibre forwards, with the result that some of this fibre falls into the pit 4 as waste.

During this initial start-up phase, routine variation in the fiberising conditions (and in particular adjustment of the angle α) in conventional manner will allow the operator to achieve fiberising conditions which are considered to be acceptable, and therefore are the target fiberising conditions for subsequent control of the process.

Having established these target fiberising conditions, the control system notes the details of the target conditions, for instance the power consumption on each of the rotors and the position of the impact point, especially angle α. This data is stored in the control system as, inter alia, the target torque ratio (for instance the ratio of the power consumption on rotors 10 and 9). The operator then switches the process to automatic control, and the process runs substantially at the target fiberising conditions despite spontaneous variations in any or all of the melt viscosity properties, the melt rate and α, around the initial target values for each of these.

In a simple case, the process is controlled by the torque value which is the ratio of the torque on the fourth rotor (rotor 10) to the third rotor (rotor 9). As an example, assume that the torque ratio for rotor 10:rotor 9 should be 0.8. If the actual monitored value is 0.9 this would indicate that the amount of fibre production on rotor 10 is higher than the target value. This would indicate that, for the actual amount of fibre, there will be a deficiency of binder from the nozzles 13 adjacent to the rotor 10 and there may be a deficiency of secondary air from the nozzles 15 adjacent to rotor 10.

In order to restore the fibre production on rotor 10 to the desired value, and thus to reinstate the target torque ratio of 0.8, experience will normally show that fibre production should be moved upwards along the cascade and that this can be achieved by increasing α on the top rotor, 7. This applies irrespective of whether the reason for the torque ratio moving to 0.9 is because of a spontaneous change in α or because of a change in melt viscosity properties or melt rate. Irrespective of the cause, the change in fibre production on wheel 10 is corrected in the same manner, namely by increasing α from whatever value it had when the torque ratio was monitored as being too high, until it regains the desired value of 0.8.

In order to achieve the increase in α, an appropriate algorithm will be used which will contain a conventional control loop with PID functions which will secure that any corrective movement will take place in a modest manner with a modest transient without too much overshoot or oscillations. The PID function results in a control action proportional (P = proportion) to the deviation (difference between actual 0.9 and target point 0.8 = 0.9-0.8 = 0.1), proportional to the accumulated deviation (I = integral) and proportional to the deviation speed (D = differential, not often in use). The direction of correction is secured by calculating the deviation with sign: positive or negative. The control action will therefore be directed in the right direction at once.

In practice, of course, the control system would activate correction of α as soon as any drift of the torque ratio away from the target point is discerned, and thus this can occur, without difficulty, every few seconds or, usually, at greater intervals (for instance 10 to 30 seconds, or sometimes longer).

### Example 1

In one actual process, mineral wool was made on a cascade spinner having four rotors where the positions, sizes and speeds of the rotors were unchanged and the target melt rate and melt viscosity was unchanged, throughout the six hours of the running of the process. The ratio of torque on the fourth rotor to the torque on the second rotor was monitored throughout the process.

When the process was running in accordance with the prior art, it was found that the torque ratio for rotor 4:rotor 2 drifted with time between amounts as high as 1.8 and as low as 1.3, with a standard deviation over three hours of 10%. Automatic control of the process was then introduced, with the target torque ratio being set for sequential periods at different values of, for instance, 1.8, 1.9, 1.7 and 1.6.

In each instance the algorithm was set to control the ratio within a value of ±0.1, by moving the melt outlet so as to vary the angle α. There were a limited number of instantaneous peaks outside the limits but the process was otherwise controlled entirely within the preset limits and with a standard deviation from the target value of about 2 to 3%.

### Example 2

In order to demonstrate the fact that the invention is of particular value when the acceleration field on the top rotor is at least 30km/s², a process was conducted using a similar spinnerette and melt. The effect of changing α on the torque ratio on rotor 4:rotor 3 was examined when the top rotor was running at a relatively high acceleration field (about 30km/s²). It was found that when target α was 30° the ratio fluctuated between around 1.15 and 1.35, at 45° it fluctuated between about 1.1 and 1.2, at 55° it fluctuated between 1 and 1.1,and 60° it fluctuated between .9 and 1. However at a lower acceleration field (about 10km/s²) the ratio rotor 4:rotor 3 was influenced much less by the angle α, for instance ranging from about 1.3 at 30° to about 1.2 at 60°. However at these lower acceleration fields the ratio of torque values for rotor 4:rotor 2 was more significant, ranging from around 2.6 at 30° to around 2 at 60°.

The torque on rotor 1 also varied with angle and acceleration field. For instance at the low acceleration fields the torque on rotor 1 varied from around 1.8 at 30° up to around 3.2kw at 60°, whilst at high acceleration fields it varied from around 3.4kw at 30° to about 4kw at 45°, about 4.3kw at 55° and about 4.6kw at 60°. Naturally each of these values is merely an average of a wide spread of instantaneous values.

Accordingly, larger variations in α may be needed to maintain target productivity and quality when the top rotor is running at higher acceleration fields than when it is running at lower acceleration fields. In each instance the acceleration field on the second and subsequent rotors is greater than the acceleration field on the top rotor.

### Example 3

In another actual process, mineral wool was made on separate days on the same cascade spinner having four rotors arranged with corresponding positions, sizes and preselected speeds of rotation on each day. The spinner was provided with the same target melt rate and target melt viscosity throughout the entire process.

The spinner was set up with the same initial optimum target operation by the same skilled operative. Each process then ran for 24 hours. In both processes the acceleration field on the top rotor was the same (30 to 35km/s²) and in both processes the target angle α was the same (between 50 and 60°).

In one of the processes, process A, no attempt was made to hold the ratio of the torque on rotor 4:torque on rotor 2 to a constant value.

In the process according to the invention, process B, α was varied (by moving the melt outlet) in response to the variations in the torque ratio on rotor 4:rotor 2, in an attempt at keeping the ratio as constant as possible. It was found necessary to vary α within a range of about ±5°, in order to hold the torque ratio substantially constant.

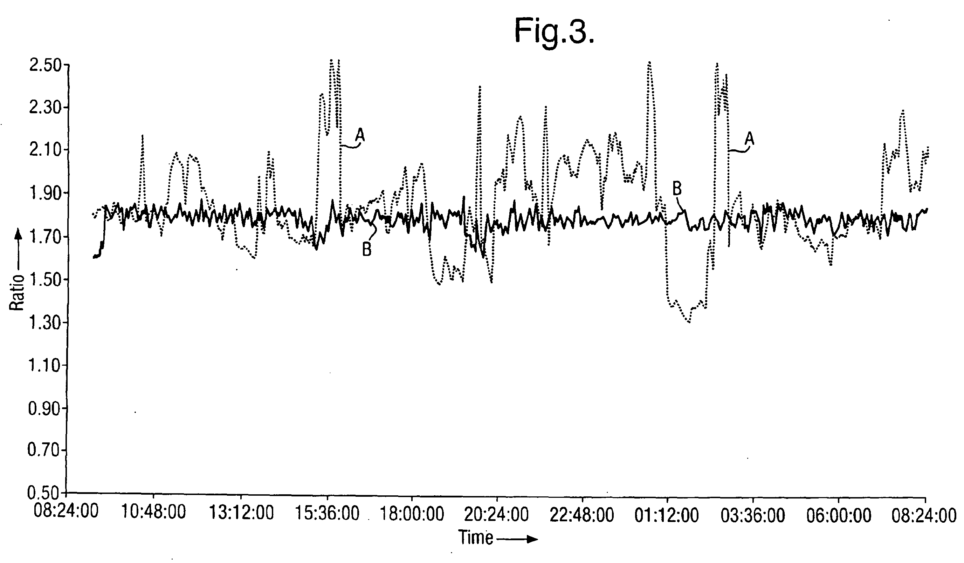

A plot of the torque ratio throughout the 24 hours operation is shown in Figure 3. The variation in the ratio in process A had a standard deviation of 18.5% whereas the variation in the ratio for process B had a standard deviation of only 4%.

Visual and analytical determination of the quality of the product in process B showed that it was more homogeneous. It had less variations in quality parameters such as binder distribution, mechanical properties, % shots, and impurities than the product of process A. Some trials also demonstrated better insulating properties than the product of process A. Analysis of the consumption of melt and the consumption of power in process B also showed that the process was more economical both in power consumption and melt consumption than process A.

The benefit of the invention is even greater when the acceleration field on the top rotor is above 50km/s².

## Claims

1. A process for making mineral wool by forming mineral fibres by centrifugal fiberisation of a mineral melt (19, 20) using a cascade spinner (5) and collecting the fibres as wool,
in which the cascade spinner (5) comprises a sequence of a top (first) rotor (7) and a subsequent (second) rotor (8) and optionally other subsequent rotors (9, 10), each rotor rotates about a different substantially horizontal axis with a rotational direction opposite to the rotational direction of the or each adjacent rotor in the sequence, and the different horizontal axes are arranged such that melt poured from a melt outlet (18) on to the top rotor (7) is thrown in sequence on to the peripheral surface of the or each subsequent rotor (8, 9, 10) and fibres are thrown off the or each subsequent rotor (8, 9, 10) and optionally off the top rotor (7),
the or each subsequent rotor (8, 9, 10) rotates at a preselected speed and has a preselected size,
the subsequent (second) rotor (8) adjacent the top rotor (7) is in a preselected position with respect to any other subsequent rotors (9, 10),
the melt has substantially target melt viscosity properties and
the melt is poured at a substantially target melt rate from the melt outlet (18) over an impact area on the top rotor wherein the centre (22) of the impact area makes an angle α with the horizontal of between 30 and 70°,
**characterised in that** the torque ratio is monitored wherein the torque ratio is the ratio of the torque on at least one rotor that is rotating at a predetermined speed to the torque on at least one other rotor that is rotating at a predetermined speed, and
deviation of the monitored torque ratio from a target torque ratio is reduced or eliminated by altering the position of the impact area and/or the rotational speed of the top rotor (7) and/or the position of the top rotor (7) relative to the subsequent (second) rotor (8).

2. A process according to claim 1 comprising the initial step of selecting a speed and size for the or each subsequent rotor (8, 9, 10), the position of the subsequent (second) rotor with respect to any other subsequent (third or fourth) rotors (9, 10), the position of the top rotor (7) relative to the subsequent (second) rotor (8), the rotational speed of the top rotor (7), the size and/or shape and/or position of the impact area, the target melt rate and the target melt viscosity properties,
and in this process the target torque ratio is the torque ratio when a target pattern of fiberisation is achieved, and the reduction or elimination of any deviation in the monitored torque ratio from the target torque ratio results in reduction or elimination of any deviation of the pattern of fiberisation from the target pattern of fiberisation.

3. A process according to claim 1 or claim 2 in which the reduction or elimination of the deviation in torque ratio is achieved automatically.

4. A process according to any preceding claim in which deviation of the monitored torque ratio from a target torque ratio is reduced or eliminated by altering the angle α.

5. A process according to claim 4 in which, during the process, each of the rotors of the cascade spinner has a preselected rotational speed and a preselected position relative to all the other rotors, and the deviation in the monitored torque ratio from the torque value is reduced or eliminated by altering the angle α.

6. A process according to claim 5 in which the cascade spinner is in a fixed position during the process and the angle α is altered by moving the melt outlet transversely to the axle of the top rotor.

7. A process according to claim 5 or claim 6 in which the spinner has a top rotor and subsequent second, third and fourth rotors and in which the torque ratio comprises the ratio of torques on the third and fourth rotors and/or it comprises the ratio of torques on the second and fourth rotors and/or it comprises the ratio of torques the first and second rotors with the torque on the fourth rotor.

8. A process according to any of claims 5 to 7 in which the torque on the top rotor is held within a predetermined range and/or the ratio of the torque on the top rotor to the torque on one or more other rotors is held within a predetermined range.

9. A process according to any preceding claim in which each rotor is driven by a motor dedicated to that rotor and torque is monitored by monitoring the power consumption of the rotor.

10. A process according to claim 9 in which the power consumption which is monitored is a statistically significant value calculated automatically on the basis of sequential, substantially instantaneous, observations of the power consumption of that motor.

11. A process according to any preceding claim in which the acceleration field on the top rotor is at least 30km/s² and the acceleration field on the or each subsequent rotor is greater than the acceleration field on the top rotor.

12. A process according to any preceding claim in which the angle α is adjusted within the range 40 to 65°.

13. A process according to any preceding claim in which binder is sprayed on to the fibres formed on the centrifugal spinner before they are collected as wool.

14. Apparatus suitable for use in a process according to any preceding claim comprising a cascade spinner (5) which comprises a sequence of a top (first) rotor (7) and a subsequent (second) rotor (8) and optionally other rotors (9, 10), each rotor being mounted for rotation about a different substantially horizontal axis with a rotational direction opposite to the rotational direction of the or each adjacent rotor in the sequence, and the different horizontal axes being arranged such that melt poured from a melt outlet (18) on to the top rotor (7) is thrown in sequence on to the peripheral surfaces of the or each subsequent rotor (8, 9, 10) and fibres are thrown off the or each subsequent rotor (8, 9, 10) and optionally off the top rotor (7),
the or each subsequent rotor (8, 9, 10) is mounted for rotation at a preselected speed and has a preselected size, and
the subsequent (second) rotor (8) adjacent the top rotor (7) is mounted in a preselected position with respect to any other subsequent rotors (9, 10)
and wherein there are means for monitoring the torque ratio wherein the torque ratio is the ratio of the torque on at least one rotor that is rotating at a predetermined speed to the torque on at least one other rotor that is rotating at a predetermined speed,
and wherein there are means whereby deviation of the monitored torque ratio from a target torque ratio is reduced or eliminated by altering the position of the impact area and/or the rotational speed of the top rotor (7) and/or the position of the top rotor (7) relative to the subsequent (second) rotor (8).

15. Apparatus according to claim 14 additionally including a melt outlet associated with the spinner and from which melt may be poured over an impact area on the top rotor of the spinner, and additionally including means for altering the position of the impact area and/or the rotational speed of the top rotor and/or the position of the top rotor relative to the second rotor in response to deviation of the monitored torque ratio from a target torque ratio.

## Patentansprüche

1. Verfahren zur Herstellung von Mineralwolle durch Bilden von Mineralfasern durch Schleuderzerfaserung einer mineralischen Schmelze (19, 20) unter Verwendung einer Kaskadenschleudervorrichtung (5) und Sammeln der Fasern als Wolle,
bei dem die Kaskadenschleudervorrichtung (5) eine Abfolge von einem oberen (ersten) Rotor (7) und einem folgenden (zweiten) Rotor (8) und gegebenenfalls anderen folgenden Rotoren (9, 10) umfasst, wobei jeder Rotor um eine verschiedene, im wesentlichen horizontale Achse mit einer gegensätzlichen Drehrichtung zu der Drehrichtung des oder jeden benachbarten Rotors in der Abfolge rotiert und die verschiedenen, horizontalen Achsen so angeordnet sind, dass Schmelze, die aus einer Schmelzauslassöffnung (18) auf den oberen Rotor (7) gegossen wird, der Reihe nach auf die Randoberfläche des oder jedes folgenden Rotors (8, 9, 10) geworfen wird und Fasern von dem oder jedem folgenden Rotor (8, 9, 10) und gegebenenfalls dem oberen Rotor (7) abgeschleudert werden,
der oder jeder folgende Rotor (8, 9, 10) mit einer vorher ausgewählten Geschwindigkeit rotiert und eine vorher ausgewählte Größe aufweist,
der folgende (zweite) Rotor (8), der dem oberen Rotor (7) benachbart ist, in einer vorher ausgewählten Position bezüglich jedes anderen folgenden Rotors (9, 10) ist,
die Schmelze im wesentlichen ein Soll-Schmelzviskositätsverhalten aufweist und
die Schmelze mit im wesentlichen einer Soll-Schmelzrate von der Schmelzauslassöffnung (18) über eine Aufprallzone auf den oberen Rotor gegossen wird, wobei das Zentrum (22) der Aufprallzone einen Winkel α mit der Horizontalen zwischen 30 und 70° bildet,
**dadurch gekennzeichnet, dass** das Drehmomentverhältnis überwacht wird, wobei das Drehmomentverhältnis das Verhältnis des Drehmoments an mindestens einem Rotor, der mit einer vorher ausgewählten Geschwindigkeit rotiert, zu dem Drehmoment an mindestens einem anderen Rotor, der mit einer vorher ausgewählten Geschwindigkeit rotiert, ist, und
die Abweichung des überwachten Drehmomentverhältnisses von einem Soll-Drehmomentverhältnis durch Verändern der Position der Aufprallzone und/oder der Drehzahl des oberen Rotors (7) und/oder der Position des oberen Rotors (7) relativ zu dem folgenden (zweiten) Rotor (8) verringert oder beseitigt wird.

2. Verfahren nach Anspruch 1, umfassend den anfänglichen Schritt der Auswahl einer Geschwindigkeit und einer Größe für den oder jeden folgenden Rotor (8, 9, 10), der Position des folgenden (zweiten) Rotors bezüglich jedes anderen der folgenden (dritten oder vierten) Rotoren (9, 10), der Position des oberen Rotors (7) relativ zu dem folgenden (zweiten) Rotor (8), der Drehzahl des oberen Rotors (7), der Größe und/oder der Gestalt und/oder der Position der Aufprallzone, der Soll-Schmelzrate und des Soll-Schmelzviskositätsverhaltens, wobei in diesem Verfahren das Soll-Drehmomentverhältnis das Drehmomentverhältnis ist, wenn ein Soll-Muster der Faserbildung erreicht ist, und die Verringerung oder Beseitigung von einer Abweichung im überwachten Drehmomentverhältnis vom Soll-Drehmomentverhältnis zu einer Verringerung oder Beseitigung einer Abweichung des Zerfaserungsmusters von dem Soll-Zerfaserungsmuster führt.

3. Verfahren nach Anspruch 1 oder Anspruch 2, in welchem die Verringerung oder Beseitigung der Abweichung im Drehmomentverhältnis automatisch erreicht wird.

4. Verfahren nach irgendeinem vorhergehenden Anspruch, in welchem die Abweichung des überwachten Drehmomentverhältnisses von einem Soll-Drehmomentverhältnis durch Verändern des Winkels α verringert oder beseitigt wird.

5. Verfahren nach Anspruch 4, in welchem während des Verfahrens jeder der Rotoren der Kaskadenschleudervorrichtung eine vorher ausgewählte Drehzahl und eine vorher ausgewählte Position relativ zu allen anderen Rotoren aufweist und die Abweichung im überwachten Drehmomentverhältnis vom Drehmomentwert durch Verändern des Winkels α verringert oder beseitigt wird.

6. Verfahren nach Anspruch 5, in welchem die Kaskadenschleudervorrichtung sich während des Verfahrens in einer fixierten Position befindet und der Winkel α durch Bewegen der Schmelzauslassöffnung quer zur Achse des oberen Rotors verändert wird.

7. Verfahren nach Anspruch 5 oder Anspruch 6, in welchem die Schleudervorrichtung einen oberen Rotor und nachfolgende zweite, dritte und vierte Rotoren aufweist und in welchem das Drehmomentverhältnis das Verhältnis der Drehmomente an dem dritten und vierten Rotor umfasst und/oder es das Verhältnis der Drehmomente an dem zweiten und vierten Rotor umfasst und/oder es das Verhältnis der Drehmomente des ersten und zweiten Rotors mit dem Drehmoment am vierten Rotor umfasst.

8. Verfahren nach irgendeinem der Ansprüche 5 bis 7, in welchem das Drehmoment am oberen Rotor in einem vorbestimmten Bereich gehalten wird und/oder das Verhältnis des Drehmoments am oberen Rotor zum Drehmoment an einem oder mehreren anderen Rotoren in einem vorbestimmten Bereich gehalten wird.

9. Verfahren nach irgendeinem vorhergehenden Anspruch, in welchem jeder Rotor durch einen für diesen Rotor bestimmten Motor angetrieben wird und das Drehmoment durch Überwachen des Energieverbrauchs des Rotors überwacht wird.

10. Verfahren nach Anspruch 9, in welchem der Energieverbrauch, der überwacht wird, ein statistisch signifikanter Wert ist, der automatisch auf Basis von aufeinanderfolgenden, im wesentlichen momentanen Beobachtungen des Energieverbrauchs dieses Motors berechnet wird.

11. Verfahren nach irgendeinem vorhergehenden Anspruch, in welchem das Beschleunigungsfeld an dem oberen Rotor mindestens 30 km/s² beträgt und das Beschleunigungsfeld an dem oder jedem folgenden Rotor größer ist als das Beschleunigungsfeld an dem oberen Rotor.

12. Verfahren nach irgendeinem vorhergehenden Anspruch, in welchem der Winkel α im Bereich von 40 bis 65° eingestellt wird.

13. Verfahren nach irgendeinem vorhergehenden Anspruch, in welchem Bindemittel auf die Fasern gesprüht wird, die mit der Zentrifugalschleudervorrichtung gebildet werden, bevor sie als Wolle gesammelt werden.

14. Vorrichtung, die zur Verwendung in einem Verfahren nach irgendeinem vorhergehenden Anspruch geeignet ist, umfassend eine Kaskadenschleudervorrichtung (5), welche eine Abfolge von einem oberen (ersten) Rotor (7) und einem folgenden (zweiten) Rotor (8) und gegebenenfalls anderen Rotoren (9, 10) umfasst, wobei jeder Rotor für die Rotation um eine verschiedene, im wesentlichen horizontale Achse mit einer gegensätzlichen Drehrichtung zu der Drehrichtung des oder jeden benachbarten Rotors in der Abfolge montiert ist und die verschiedenen horizontalen Achsen so angeordnet sind, dass Schmelze, die aus einer Schmelzauslassöffnung (18) auf den oberen Rotor (7) gegossen wird, der Reihe nach auf die Randoberfläche des oder jedes folgenden Rotors (8, 9, 10) geworfen wird und Fasern von dem oder jedem folgenden Rotor (8, 9, 10) und gegebenenfalls dem oberen Rotor (7) abgeschleudert werden,
der oder jeder folgende Rotor (8, 9, 10) für die Rotation mit einer vorher ausgewählten Geschwindigkeit montiert ist und eine vorher ausgewählte Größe aufweist und
der folgende (zweite) Rotor (8), der dem oberen Rotor (7) benachbart ist, in einer vorher ausgewählten Position bezüglich jedes anderen folgenden Rotors (9, 10) montiert ist,
und wobei es ein Mittel zur Überwachung des Drehmomentverhältnisses gibt, wobei das Drehmomentverhältnis das Verhältnis des Drehmoments an mindestens einem Rotor, der mit einer vorher ausgewählten Geschwindigkeit rotiert, zu dem Drehmoment an mindestens einem anderen Rotor, der mit einer vorher ausgewählten Geschwindigkeit rotiert, ist,
und wobei es ein Mittel gibt, wodurch die Abweichung des überwachten Drehmomentverhältnisses von einem Soll-Drehmomentverhältnis durch Verändern der Position der Aufprallzone und/oder der Drehzahl des oberen Rotors (7) und/oder der Position des oberen Rotors (7) relativ zu dem folgenden (zweiten) Rotor (8) verringert oder beseitigt wird.

15. Vorrichtung nach Anspruch 14, die zusätzlich eine Schmelzauslassöffnung beinhaltet, die mit der Schleudervorrichtung verknüpft ist und von der Schmelze über eine Aufprallzone auf dem oberen Rotor der Schleudervorrichtung gegossen werden kann, und die zusätzlich ein Mittel zum Verändern der Position der Aufprallfläche und/oder der Drehzahl des oberen Rotors und/oder der Position des oberen Rotors relativ zu dem zweiten Rotor als Reaktion auf die Abweichung des überwachten Drehmomentverhältnisses von einem Soll-Drehmomentverhältnis beinhaltet.

## Revendications

1. Processus destiné à fabriquer de la laine minérale en formant des fibres minérales par défibrage centrifuge d'une matière minérale fondue (19, 20) en utilisant un fileur à cascades (5) et en collectant les fibres comme laine,
dans lequel le fileur à cascades (5) comprend une séquence d'un rotor supérieur (premier) (7) et d'un rotor suivant (second) (8) et en option d'autres rotors suivants (9, 10), chaque rotor tournant autour d'un axe sensiblement horizontal différent avec une direction de rotation opposée à la direction de rotation du ou de chaque rotor adjacent dans la séquence, et les axes horizontaux différents étant agencés de sorte qu'une matière fondue versée depuis une sortie de matière fondue (18) sur le rotor supérieur (7) est jetée en séquence sur la surface périphérique du ou de chaque rotor suivant (8, 9, 10) et des fibres sont jetées du ou de chaque rotor suivant (8, 9, 10) et en option du rotor supérieur (7),
le ou chaque rotor suivant (8, 9, 10) tourne à une vitesse présélectionnée et a une taille présélectionnée,
le rotor suivant (second) (8) adjacent au rotor supérieur (7) est dans une position présélectionnée par rapport à l'un quelconque des autres rotors suivants (9, 10),
la matière fondue a sensiblement des propriétés de viscosité de matière fondue cible et
la matière fondue est versée à un certain débit de matière fondue cible depuis la sortie de matière fondue (18) sur une zone d'impact sur le rotor supérieur où le centre (22) de la zone d'impact fait un angle α avec l'horizontale situé entre 30° et 70°,
**caractérisé en ce que** le rapport de couple est surveillé dans lequel le rapport de couple est le rapport du couple sur au moins un rotor qui tourne à une vitesse prédéterminée au couple sur au moins un autre rotor qui tourne à une vitesse prédéterminée, et
la déviation du rapport de couple surveillé par rapport à un rapport de couple cible est réduite ou éliminée en modifiant la position de la zone d'impact et/ou la vitesse de rotation du rotor supérieur (7) et/ou la position du rotor supérieur (7) par rapport au rotor suivant (second) (8).

2. Processus selon la revendication 1 comprenant l'étape initiale consistant à sélectionner une vitesse et une taille pour le ou chaque rotor suivant (8, 9, 10), la position du rotor suivant (second) par rapport l'un quelconque des rotors suivants (troisième ou quatrième) (9, 10), la position du rotor supérieur (7) par rapport au rotor suivant (second) (8), la vitesse de rotation du rotor supérieur (7), la taille et/ou la forme et/ou la position de la zone d'impact, le débit de matière fondue cible et les propriétés de viscosité de matière fondue cible,
et dans ce processus, le rapport de couple cible est le rapport de couple lorsqu'un motif cible de défibrage est obtenu, et la réduction ou l'élimination de toute déviation dans le rapport de couple surveillé par rapport au rapport de couple cible entraîne la réduction ou l'élimination de toute déviation du motif de défibrage par rapport au motif cible de défibrage.

3. Processus selon la revendication 1 ou la revendication 2 dans lequel la réduction ou l'élimination de la déviation du rapport de couple est obtenue automatiquement.

4. Processus selon l'une quelconque des revendications précédentes dans lequel la déviation du rapport de couple surveillé par rapport à un rapport de couple cible est réduite ou éliminée en modifiant l'angle α.

5. Processus selon la revendication 4 dans lequel, pendant le processus, chacun des rotors du fileur à cascades a une vitesse de rotation présélectionnée et une position présélectionnée par rapport à tous les autres rotors, et la déviation du rapport de couple surveillé par rapport à la valeur de couple est réduite ou éliminée en modifiant l'angle α.

6. Processus selon la revendication 5 dans lequel le fileur à cascades est dans une position fixe pendant le processus et l'angle α est modifié en déplaçant la sortie de matière fondue de manière transversale par rapport au rotor supérieur.

7. Processus selon la revendication 5 ou la revendication 6 dans lequel le fileur a un rotor supérieur et un second, un troisième et un quatrième rotors suivants et dans lequel le rapport de couple comprend le rapport des couples sur les troisième et quatrième rotors et/ou comprend le rapport des couples sur les second et quatrième rotors et/ou comprend le rapport des couples sur le premier et le second rotors avec le couple sur le quatrième rotor.

8. Processus selon l'une quelconque des revendications 5 à 7 dans lequel le couple sur le rotor supérieur est maintenu dans une gamme prédéterminée et/ou le rapport du couple sur le rotor supérieur au couple sur un ou plusieurs autres rotors est maintenu dans une gamme prédéterminée.

9. Processus selon l'une quelconque des revendications précédentes dans lequel chaque rotor est entraîné par un moteur destiné à ce rotor et le couple est surveillé en surveillant la consommation d'énergie du rotor.

10. Processus selon la revendication 9 dans lequel la consommation d'énergie qui est surveillée est une valeur statistiquement significative calculée automatiquement sur la base d'observations séquentielles sensiblement instantanées de la consommation d'énergie de ce moteur.

11. Processus selon l'une quelconque des revendications précédentes dans lequel le champ d'accélération sur le rotor supérieur est d'au moins 30 km/s2 et le champ d'accélération sur le ou chaque rotor suivant est supérieur au champ d'accélération sur le rotor supérieur.

12. Processus selon l'une quelconque des revendications précédentes dans lequel l'angle α est ajusté dans la gamme de 40 à 65°.

13. Processus selon l'une quelconque des revendications précédentes dans lequel un liant est vaporisé sur les fibres formées sur le fileur centrifuge avant qu'elles soient collectées comme laine.

14. Appareil adapté pour être utilisé dans un processus selon l'une quelconque des revendications précédentes comprenant un fileur à cascades (5) qui comprend une séquence d'un rotor supérieur (premier) (7) et d'un rotor suivant (second) (8) et en option d'autres rotors (9, 10), chaque rotor étant monté pour tourner autour d'un axe sensiblement horizontal différent avec une direction de rotation opposée à la direction de rotation du ou de chaque rotor adjacent dans la séquence, et les axes horizontaux différents étant agencés de sorte qu'une matière fondue versée depuis une sortie de matière fondue (18) sur le rotor supérieur (7) est jetée en séquence sur les surfaces périphériques du ou de chaque rotor suivant (8, 9, 10) et des fibres sont jetées du ou de chaque rotor suivant (8, 9, 10) et en option du rotor supérieur (7),
le ou chaque rotor suivant (8, 9, 10) est monté pour tourner à une vitesse présélectionnée et a une taille présélectionnée, et
le rotor suivant (second) (8) adjacent au rotor supérieur (7) est monté dans une position présélectionnée par rapport à l'un quelconque des autres rotors suivants (9, 10)
et dans lequel il y a des moyens destinés à surveiller le rapport de couple dans lequel le rapport de couple est le rapport du couple sur au moins un rotor qui tourne à une vitesse prédéterminée au couple sur au moins un autre rotor qui tourne à une vitesse prédéterminée,
et dans lequel il y a des moyens grâce auxquels la déviation du rapport de couple surveillé par rapport à un rapport de couple cible est réduite ou éliminée en modifiant la position de la zone d'impact et/ou la vitesse de rotation du rotor supérieur (7) et/ou la position du rotor supérieur (7) par rapport au rotor suivant (second) (8).

15. Appareil selon la revendication 14 comprenant en outre une sortie de matière fondue associée avec le fileur et de laquelle une matière fondue peut être versée sur une zone d'impact sur le rotor supérieur du fileur, et comprenant en outre des moyens destinés à modifier la position de la zone d'impact et/ou la vitesse de rotation du rotor supérieur et/ou la position du rotor supérieur par rapport au second rotor en réponse à la déviation du rapport de couple surveillé par rapport à un rapport de couple cible.
